# EUROPÄISCHE PATENTSCHRIFT

(11) **EP 2 410 140 B1**
(45) Veröffentlichungstag und Bekanntmachung des Hinweises auf die Patenterteilung: **08.05.2013**
(21) Anmeldenummer: 11172300.3
(22) Anmeldetag: 01.07.2011
(51) Int. Cl.: F01M 11/02, F01M 1/08

(54) **Schmiereinrichtung für einen Kolben**
lubrication device for a piston
Dispositif de lubrification pour un piston

(30) Priorität: 20.07.2010 EP 10170174
(43) Veröffentlichungstag der Anmeldung: 25.01.2012
(73) Patentinhaber: Wärtsilä Schweiz AG, 8401 Winterthur (CH)
(72) Erfinder: Stark, Matthias, 8400 Winterthur (CH)
(74) Vertreter: Sulzer Management AG

(56) Entgegenhaltungen:
- EP-A1- 0 747 591
- JP-U- 60 065 359
- JP-U- 61 095 953
- US-A- 5 305 684

## Beschreibung

Die Erfindung betrifft eine Schmiereinrichtung für einen Kolben (z.B. US 5,305,684) und einen Kolben mit einer Schmiereinrichtung für einen Grossmotor sowie einen Grossmotor mit einer dementsprechenden Schmiereinrichtung gemäss des Oberbegriffs des entsprechenden unabhängigen Anspruchs.

In der EP 0 747 591 A1 wird ein Kolben für eine Hubkolbenbrennkraftmaschine, welche beispielsweise als ein Grossmotor ausgeführt sein kann, beschrieben. Der Kolben weist ein Kolbenoberteil und ein Kolbenunterteil auf, welche durch ein Spannelement miteinander verbunden sind. Innerhalb des Kolbens ist eine Kühlkammer angeordnet, der Kühlmittel beispielsweise in Form von Wasser zugeführt und von dort wieder abgeführt werden kann. Damit kann der Kolben vor übermässiger Erwärmung geschützt werden. Die EP 0 747 591 A1 sagt aber nichts zu einer Schmiereinrichtung zur Schmierung einer Lauffläche eines Zylinders, in welchem der Kolben hin und her bewegbar ist.

Grossmotoren, insbesondere in der Ausführung als Grossdieselmotoren, die als Zweitakt- oder als Viertakt-Verbrennungskraftmaschinen ausgestaltet sein können, werden häufig als Antriebsaggregate für Schiffe oder auch im stationären Betrieb, z.B. zum Antrieb grosser Generatoren zur Erzeugung elektrischer Energie eingesetzt. Dabei laufen die Grossmotoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Im Betriebszustand gleitet der Kolben an der als Lauffläche dienenden Oberfläche der Wandung des Zylinders, die meist in Form einer Zylinderlaufbuchse oder Zylinderliner ausgestaltet ist, entlang. Dabei ist eine Zylinder- bzw. Kolbenschmierung vorgesehen. Einerseits muss der Kolben möglichst leicht, das heisst unbehindert, in dem Zylinder gleiten, andererseits muss der Kolben den Brennraum im Zylinder möglichst gut abdichten, um eine effiziente Umwandlung der beim Verbrennungsprozess freiwerdenden Energie in mechanische Arbeit zu gewährleisten.

Deshalb wird während des Betriebs des Grossdieselmotors üblicherweise ein Schmiermittel, zumeist als Schmieröl, in den Zylinder eingebracht, um gute Laufeigenschaften des Kolbens zu erzielen und den Verschleiss der Lauffläche, des Kolbens und der Kolbenringe möglichst gering zu halten.

Ferner dient das Schmiermittel der Neutralisierung aggressiver Verbrennungsprodukte sowie der Vermeidung von Korrosion. Aufgrund dieser zahlreichen Anforderungen werden als Schmiermittel häufig sehr hochwertige und teure Substanzen verwendet.

Es besteht daher im Hinblick auf einen besonders effizienten und wirtschaftlichen Betrieb des Motors das Bedürfnis, mit möglichst geringen Schmierraten zu arbeiten.

Ein bewährtes Verfahren ist die sogenannte Innenschmierung, bei welchem das Schmiermittel durch das Innere des Kolbens gefördert wird und dann über eine oder mehrere Schmierstellen, die auf der Oberfläche des Kolbens vorgesehen sind, aus den Kolbeninneren auf den Kolben bzw. auf die Zylinderlauffläche aufgebracht wird. Ein derartiges Verfahren wird beispielsweise in der EP A 0 903 473 offenbart. Die Schmierung von Kolben eines Grossmotors hat sich als komplexe Aufgabe erwiesen, da das Schmiermittel zu der gewünschten Schmierstelle in der richtigen Menge zum richtigen Zeitpunkt erfolgen muss.

Daher ist es Aufgabe der Erfindung eine Schmiereinrichtung bereitzustellen, mittels welcher der vorhandene Bauraum im Kolben effizienter genutzt werden kann, wobei gleichzeitig die Qualität der Schmiermittelverteilung auf der Zylinderlauffläche verbessert werden soll, sodass Schmiermittelverluste verringert werden und eine Reduktion der Abgasemissionen erzielt wird, weil weniger Schmiermittel in den Brennraum gelangt.

Die Aufgabe der Erfindung wird mittels eines Kolbens mit einer Schmiereinrichtung nach Anspruch 1 gelöst.

Die Schmiereinrichtung, in der Folge auch als Impulsschmiereinrichtung bezeichnet, ist somit im Kolben angeordnet, um die Qualität der Schmiermitteleinspritzung in den Zwischenraum zwischen dem Kolbenmantel und der Innenoberfläche des Zylinderliners zu verbessern. Die Schmiereinrichtung nutzt den Druck im Brennraum zur Schmiermitteleinspritzung. Insbesondere kann das Schmiermittel unmittelbar in den Nuten der Kolbenringe zerstäuben oder vernebeln, weil das Schmiermittel mit einem hohen Druck beaufschlagbar ist und im wesentlichen der Temperatur, welche zwischen den Kolbenringen herrscht, ausgesetzt ist. Dieser Effekt trägt zu einer verbesserten Verteilung des Schmiermittels bei und führt daher auch zu einer Verringerungen an Schmiermittelverlusten und dementsprechend reduzierten Emissionen, da u. a. kein Schmiermittel von den Wänden der Brennkammer abgeschabt wird.

Der Kolben enthält zumindest ein Kolbenoberteil und ein Kolbenunterteil, welche durch ein Spannelement miteinander verbunden sind. Ein Ausführungsbeispiel für ein Spannelement ist in der US5305684 gezeigt. Mittels des Spannelements wird eine Kolbenstange mit einem Kugelgelenk mit einem Kolbenkörper verbunden. Erfindungsgemäss ist eine Schmiereinrichtung zur Schmierung einer Lauffläche eines Zylinders im Inneren des Spannelements angeordnet. Auch der Kolben der US5305684 enthält eine Schmiereinrichtung, die allerdings unterhalb des Spannelements zwischen Gelenkkopf und Spannelement angeordnet ist. Der Gelenkkopf ist als Teil der Kolbenstange anzusehen. Das Spannelement enthält einen Schmiermittelvorratsraum, wobei der Kolbenoberteil relativ zum Kolbenunterteil beweglich ist, sodass der Schmiermittelvorratsraum in seiner Grösse veränderbar ist. Insbesondere ist der Kolbenoberteil entlang des Spannelements relativ zum Kolbenunterteil verschiebbar. Vorteilhafterweise ist eine Mehrzahl von Spannelementen vorgesehen, mittels welchen der Kolbenoberteil und der Kolbenunterteil miteinander verbunden sind. Das Spannelement ist als Spannschraube ausgestaltet.

Das Spannelement erfüllt somit eine kombinierte Funktion als Spannelement und als Schmierelement. Wird das Spannelement einer Zugbelastung ausgesetzt, hält es Kolbenoberteil und Kolbenunterteil in einem definierten Abstand zueinander. Wird das Spannelement einer Druckbelastung ausgesetzt, nähert sich das Kolbenunterteil dem Kolbenoberteil so weit, bis ein genau definiertes Volumen an Schmiermittel im Spannelement verdrängt ist. Es kann dabei sein, dass das Kolbenunterteil auf dem Kolbenoberteil aufliegt.

Während der Kompression verringert sich das Volumen des Schmiermittelvorratsraums, wodurch der Druck des Schmiermittels im Schmiermittelvorratsraum steigt. Zu einem bestimmten Zeitpunkt wird das Schmiermittel in oder zwischen die Nuten der Kolbenringe eingebracht. Hierzu öffnet das erste Absperrelement, welches als Rückschlagventil ausgebildet sein kann. Sobald das Absperrelement geöffnet ist, strömt das Schmiermittel schnell aus, weil es sich unter Druck befindet. Bei den im Zylinderraum vorliegenden Temperaturen kann es bei Lösungen nach dem Stand der Technik zur Verdampfung des Schmiermittels kommen, was beispielsweise aufgrund der Verbrennungsrückstände zu vermeiden ist. Im Bereich der Kolbenringe ist die thermische Belastung wesentlich geringer, sodass unter üblichen Betriebsbedingungen ein Verdampfen des Schmiermittels nicht erfolgen sollte.

Besonders vorteilhafte Ausgestaltungen der Erfindung sind in den Unteransprüchen beschrieben.

Der Schmiermittelvorratsraum weist ein erstes Ende auf, an welchem ein erstes Absperrelement angeordnet ist und ein zweites Ende, an welchem ein zweites Absperrelement angeordnet ist. Durch das erste Absperrelement ist eine Verbindung zu einer Schmiermittelquelle freigebbar und durch das zweite Absperrelement ein Kanal zu einer Schmierstelle, wenn das entsprechende Absperrelement in einer offenen Stellung gehalten ist.

Die Grösse des Schmiermittelvorratsraums ist durch ein bewegliches Schmierkolbenelement veränderbar.

Der Schmiermittelvorratsraum kann einen ersten Teilraum und einen zweiten Teilraum umfassen, wobei der erste Teilraum zwischen dem ersten und dem zweiten Absperrelement ein konstantes Volumen aufweist. Der zweite Teilraum ist stromabwärts des zweiten Absperrelements angeordnet, dessen Volumen mittels eines Schmierkolbenelements veränderbar ist.

Das Spannelement kann einen Schraubenkörper umfassen, welcher mit dem Kolbenoberteil verbunden ist.

Der Schraubenkörper ist mit einem Schraubenhals verbunden, wobei an den Schraubenhals ein Schraubenkopfelement anschliesst, mittels welchem das Kolbenunterteil mit dem Kolbenoberteil verbunden werden kann.

Der Schraubenkörper weist insbesondere ein Mantelteil auf, entlang dessen ein Greifelement hin und her bewegbar ist, wobei das Greifelement als ein Teil des Schraubenhalses ausgebildet ist. Das Greifelement ist zwischen einem ersten Anschlag und einem zweiten Anschlag, die als Vorsprünge des Schraubenkörpers ausgebildet sind, hin und her bewegbar. Das Greifelement enthält eine Auslassöffnung für Schmiermittel, welches in seinem Mantel angeordnet ist.

Ein Kolbenhemd kann zwischen dem Kolbenunterteil und dem Kolbenoberteil angeordnet sein, wobei das Kolbenhemd mit dem Spannelement in einer definierten Position zwischen Kolbenoberteil und Kolbenunterteil haltbar ist.

Der Schmiermittelvorratsraum ist über einen Kanal mit zumindest einer Schmierstelle verbunden, wobei die Schmiermittelzufuhr zur Schmierstelle mittels eines Absperrelements regelbar ist.

Das erste Absperrelement der Schmiermittelzufuhr zu der Schmiereinrichtung umfasst ein Ventilelement.

Der Kolben weist eine Mehrzahl von Spannelementen auf, wobei mindestens eines der Spannelemente eine Schmiereinrichtung nach einem der vorhergehenden Ansprüche enthält.

Ein Grossmotor umfasst einen Kolben nach einem der vorhergehenden Ausführungsbeispiele.

Nachfolgend wird die Erfindung anhand der Zeichnungen erläutert. Es zeigen:
- Fig. 1: eine schematische Darstellung eines Grossmotors
- Fig. 2: den Zylinder des Grossmotors gemäss Fig. 1
- Fig. 3: einen Schnitt durch einen Kolben nach dem Stand der Technik
- Fig. 4: einen Schnitt durch einen Kolben gemäss der Erfindung
- Fig. 5: ein erstes Ausführungsbeispiel einer erfindungsgemässen Schmiereinrichtung
- Fig. 6: ein zweites Ausführungsbeispiel einer erfindungsgemässen Schmiereinrichtung
- Fig. 7: ein drittes Ausführungsbeispiel einer erfindungsgemässen Schmiereinrichtung

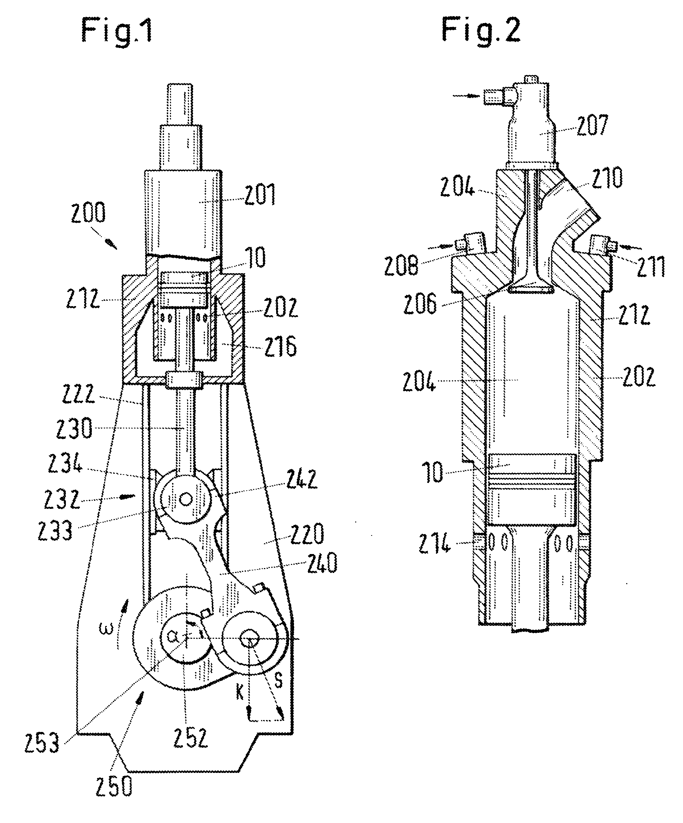

Fig. 1 zeigt einen Grossmotor 200, in welchem im Betriebszustand ein Kolben 10 an der als Lauffläche dienenden Oberfläche der Wandung des Zylinderliners 202 des Zylinders 201 entlang gleitet. Der Zylinder 201 und der Kolben 10 schliessen einen Arbeitsraum oder Brennraum 204 ein. Das Volumen des Brennraums 204 ist je nach der Stellung des Kolbens veränderbar. Der Zylinder 201 hat ein Kopfteil 205, welches ein Gaswechselventil 206, einen Lufteinspeisekanal 210 und eine Antriebseinheit 207 für das Gaswechselventil 206 enthält. Des weiteren sind eine Mehrzahl von Einspritzdüsen 208 für Brennstoff und eine Einspeisedüse 211 für Startluft am Kopfteil 205 auf der Höhe des Gaswechselventils 206 angeordnet.

An den Kopfteil 205 schliesst der Zylinderkörper 212 an. Der Zylinderkörper 212 enthält den Zylinderliner 202 sowie Spülschlitze 214 im unteren Bereich des Zylinderliners 202, die Verbindung zwischen dem Brennraum 204 und einem Zylinderraum 216 herstellen, wenn der Kolben 10 sich in der unteren Totpunktlage oder deren Nähe befindet. Der Zylinderraum 216 umgibt den Zylinderkörper 212 und steht in Verbindung mit der Umgebung, sodass Luft aus der Umgebung in den Zylinderraum 216 gelangen kann.

An den Zylinderraum 216 schliesst ein Triebwerksraum 220 an. Innerhalb eines Triebwerkraums 220 ist eine vom Kolben 10 ausgehende Kolbenstange 230 angeordnet, die beim Betreiben des Grossmotors über einen Kreuzkopf 232 und eine Schubstange 240 auf eine Antriebswelle eines Triebwerks 250 einwirkt und dabei eine Kurbelwelle 252 mit einer Winkelgeschwindigkeit dreht. Der Kreuzkopf 232 ist mit Gleitschuhen 234 ausgestattet, welche z. B. entlang Schienen 222 hin und her bewegbar sind. Die Schienen 222 sind ortsfest im Triebwerksraum 220 angeordnet. Alternativ kann der Kreuzkopf auch entlang von Zugankern, das heisst langen Schrauben, welche vertikal fast über den ganzen Motor reichen, geführt werden.

Wenn der Kolben 10 sich in vertikaler Richtung auf und ab bewegen soll, läuft der Kreuzkopf 232 mit den Gleitschuhen 232 auf den Schienen 222 auf und ab, angetrieben durch den zwischen unterer und oberer Totpunktlage sich bewegenden Kolben 10. Die Kolbenstange 230 endet im Kreuzkopf mit einem Kreuzkopfzapfen 233. An dem Kreuzkopfzapfen 233 ist ein erstes Ende 242 der Schubstange befestigt. Ein zweites Ende 244 der Schubstange ist an einer umlaufenden Nocke der Kurbelwelle 252 befestigt.

Ein Arbeitshub des Kolbens beginnt, wenn das im Brennraum 204 komprimierte Brennstoff-Luftgemisch zündet oder gezündet wird, sodass dessen explosionsartig verlaufende Verbrennungsreaktion einsetzt. Durch den Gasdruck bewegt sich der Kolben im Zylinderliner 202 weg vom Kopfteil 205, also in der Darstellung der Fig. 1 oder Fig. 2 nach unten. Die mit dem Kolben 10 starr verbundene Kolbenstange 230 und der Kreuzkopfzapfen 233 führen dieselbe Translationsbewegung aus. Der Kreuzkopfzapfen 233 ist über die Gleitschuhe 234 entlang der Schienen 222 geführt. Gleichzeitig wird die Schubstange 240, die an ihrem ersten Ende 242 drehbar auf dem Kreuzkopfzapfen 233 gelagert ist, ausgelenkt und leitet über ihr zweites Ende 244 eine Drehbewegung der Kurbelwelle 252 ein.

Der Arbeitshub ist abgeschlossen, wenn sich der Kolben 10 im unteren Totpunkt befindet. Die Kurbelwelle hat dann eine Drehung von 180° ausgeführt. In dieser Stellung befindet sich das zweite Ende 244 der Schubstange 240 gerade unterhalb der Längsachse der Kurbelwelle 252 und der Gleitschuh 234 in seiner tiefsten Position.

Wenn sich der Kolben dem unteren Totpunkt nähert, wird das Gaswechselventil 206 geöffnet und Frischluft über die Spülschlitze 214 in den Brennraum eingeleitet. Die Verbrennungsgase verlassen den Brennraum über das geöffnete Gaswechselventil 206. Durch die fortwährende Drehung der Kurbelwelle 252 wird die Schubstange 240 und mit ihr die Kolbenstange 230 und der Kolben 10 nach oben bewegt. Wenn der Kolben die Spülschlitze 215 verschliesst, wird das Gaswechselventil 206 geschlossen, sodass die im Brennraum 204 befindliche Luft komprimiert werden kann. Der Kompressionsvorgang wird fortgesetzt, bis der Kolben den obersten Totpunkt erreicht. In dieser Stellung befindet sich das zweite Ende 244 der Schubstange 240 gerade oberhalb der Längsachse der Kurbelwelle 252 und der Gleitschuh 234 in seiner höchsten Position. Spätestens zu diesem Zeitpunkt erfolgt das Einspritzen des Brennstoffs in den Brennraum 204 und mit der Zündung des Brennstoff-Luftgemisches wird ein neuer Zyklus eingeleitet.

Dabei ist eine Zylinder- bzw. Kolbenschmierung vorzusehen, damit einerseits der Kolben 10 möglichst leicht, das heisst unbehindert, in dem Zylinderliner 202 oder der Zylinderbuchse gleiten kann, andererseits der Kolben 10 den Brennraum 204 im Zylinder 201 möglichst gut abdichtet, um eine effiziente Umwandlung der beim Verbrennungsprozess freiwerdenden Energie in mechanische Arbeit zu gewährleisten.

Deshalb wird während des Betriebs des Grossmotors üblicherweise ein Schmiermittel in den Zylinder 201 eingebracht, um gute Laufeigenschaften des Kolbens entlang des Zylinderliners 201 zu erzielen und den Verschleiss der Lauffläche, des Kolbens 10 und der Kolbenringe möglichst gering zu halten. Ferner dient das Schmieröl der Neutralisierung aggressiver Verbrennungsprodukte sowie der Vermeidung von Korrosion. Aufgrund dieser zahlreichen Anforderungen werden als Schmiermittel häufig sehr hochwertige und teure Substanzen verwendet.

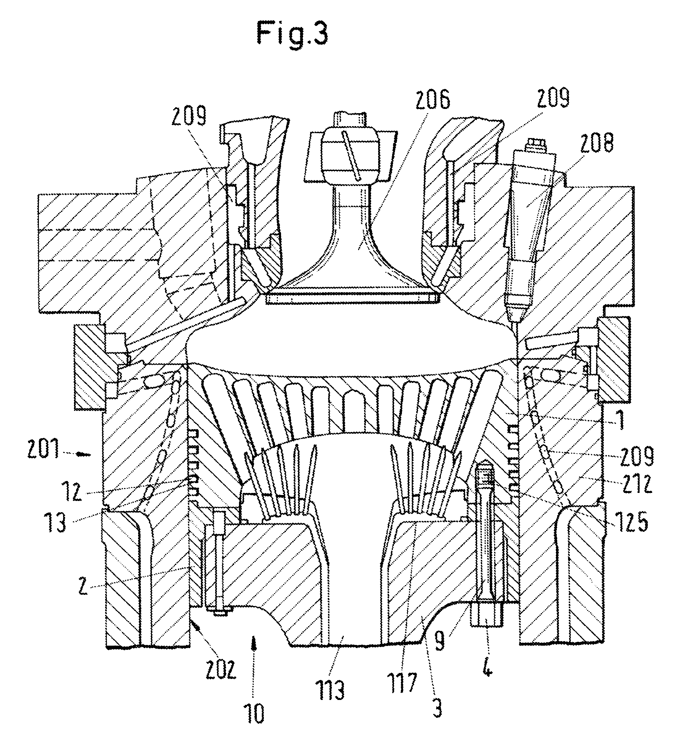

Fig. 3 zeigt einen Schnitt durch einen Kolben 10 für einen Grossmotor sowie einen Ausschnitts des Zylinders 201 nach dem Stand der Technik, in welchem sich der Kolben im oder in der Nähe des oberen Totpunkts befindet. Der Kolben 10 enthält ein Kolbenoberteil 1 und ein Kolbenunterteil 3. Der Kopfteil 205 enthält das Gaswechselventil 206. Des weiteren ist eine Einspritzdüse 208 für Brennstoff gezeigt. Des weiteren sind im Kopfteil eine Mehrzahl von Hohlräumen 209 gezeigt, die der Aufnahme von Kühlmittel dienen, um den Zylinderkopf mit einem Kühlmittel zu kühlen.

Unterhalb des Kopfteils 205 befindet sich der Zylinderkörper 212, der ebenfalls nur teilweise gezeigt ist. Auch der Zylinderkörper weist Hohlräume auf, die mit einem Kühlmittel befüllbar sind, sodass die Lauffläche, das heisst die Innenwand des Zylinderliners 202, gekühlt werden kann.

Der Kolben gleitet entlang der Innenwand des Zylinderliners 202 hin und her. Hierzu sind vorteilhafterweise eine Mehrzahl an Kolbenringen 12 auf der Mantelfläche des Kolbens vorgesehen. Die Kolbenringe befinden sich in ringförmigen Nuten 13, die in der Mantelfläche des Kolbens, hier der Mantelfläche des Kolbenoberteils 1 eingebracht sind. Zwischen dem Kolbenoberteil 1 und dem Kolbenunterteil 3 ist ein Kolbenhemd 2 angeordnet.

Der Kolbenoberteil 1, der Kolbenunterteil 3 und das Kolbenhemd 2 sind über ein Spannelement 4 miteinander verbunden. Selbstverständlich können eine Mehrzahl von Spannelementen um die Längsachse des Kolbens herum vorgesehen sein, um den Kolbenoberteil 1, den Kolbenunterteil 3 sowie das Kolbenhemd 2 miteinander dichtend zu verbinden. Das Spannelement 4 ist als Spannschraube 9 ausgebildet. Die Spannschraube ist in einer Gewindebohrung 125 des Kolbenoberteils 1 gehalten. Die Gewindebohrung ist als Sackloch ausgeführt. Im Kolbenunterteil 3 ist eine Bohrung 70 und im Kolbenhemd 2 eine Bohrung 50 vorgesehen, durch welche die Spannschraube 9 hindurchgeführt ist. Die Spannschraube 9 ist einteilig ausgeführt und hält den Kolbenoberteil 1, das Kolbenhemd 2 und den Kolbenunterteil 3 in der vorgesehenen Position fest verbunden. Da die Spannschraube als Spannbolzen ausgebildet ist, sind die genannten Teile des Kolbens relativ zueinander fixiert, wenn die Spannschraube 9 angezogen ist. Der Kolbenoberteil liegt dabei unmittelbar auf dem Kolbenhemd und das Kolbenhemd unmittelbar auf dem Kolbenunterteil auf. Die Verbindung sollte fluiddicht ausgeführt sein, dass keine Verbindung zwischen Zylinderraum und Kühlmittelsammelraum 113 oder Kühlmittelverteilerraum 117 für Kühlmittel, Gase, Brennstoff oder Schmiermittel entsteht. Das Kühlmittel sollte nicht kontaminiert werden, umgekehrt sollte auch kein Kühlmittel in den Zylinderraum gelangen. Aus diesem Grund ist eine feste Verbindung der einzelnen Kolbenteile nach diesem Ausführungsbeispiel zwingend erforderlich.

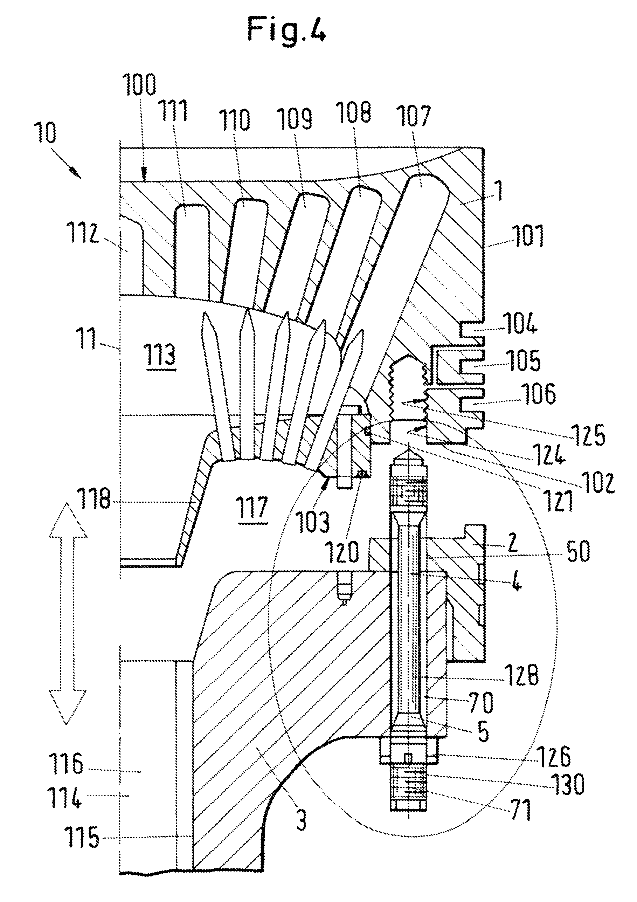

Fig. 4 zeigt einen Schnitt durch eine Hälfte eines erfindungsgemässen Kolbens 10 für einen Grossmotor, enthaltend ein Kolbenoberteil 1 und ein Kolbenunterteil 3, welche im Betriebszustand durch ein Spannelement 4 miteinander verbunden sind. Bauteile gleicher Funktion wie in Fig. 3 werden in Fig. 4 mit den gleichen Bezugszeichen versehen.

Der Kolbenoberteil 1 weist eine Kopffläche 100, eine Mantelfläche 101 und zumindest eine Auflagefläche 102, 103 auf. Die Kopffläche 100 grenzt an den Brennraum an, der von dem Kolben und den ihn umgebenden Zylinder ausgebildet ist. Eine Darstellung eines Kolbens im Zylinder eines Grossmotors findet sich beispielsweise in der EP1653078 oder EP 1329628 der Anmelderin. Die Abdichtung des Brennraums erfolgt durch eine Mehrzahl von Kolbenringen, welche auf der Mantelfläche 101 des Kolbens in den hierfür vorgesehenen Nuten 104, 105, 106 gehalten sind.

Der Kolbenoberteil kann Ausnehmungen 107, 108, 109, 110, 111, 112 aufweisen, welche zur Aufnahme eines fluiden Kühlmittels dienen. Die Ausnehmungen sind mit einem Kühlmittelsammelraum 113 in fluidleitender Verbindung. Der Kühlmittelsammelraum 113 wird über einen Kühlmittelkanal 114, welcher im Inneren des Kolbenunterteils 3 verläuft, mit Kühlmittel versorgt. Der Kühlmittelkanal kann als Ringkanal ausgebildet sein, welcher einen Aussenkanal 115 und einen Innenkanal 116 aufweist. Der Aussenkanal 115 wird zur Zuführung des Kühlmittels zu den Ausnehmungen 107, 108, 109, 110, 111, 112 verwendet, der Innenkanal 116 zur Rückführung des Kühlmittels. Der Aussenkanal mündet in einen Kühlmittelverteilerraum 117, von welchem da Kühlmittel in die 107, 108, 109, 110, 111, 112 gelangt.

Der Kühlmittelverteilerraum 117 und Kühlmittelsammelraum 113 sind voneinander durch ein Trennelement 118 getrennt. Das Trennelement 118 ist an dem Kolbenunterteil 3 mittels einer Mehrzahl von Spannschrauben 119 befestigt. In Fig. 1 ist nur eine derartige Spannschraube gezeigt. Eine Dichtung 120 ist zwischen Kolbenunterteil 3 und Trennelement 118 vorgesehen. Diese Dichtung dient dazu, zu verhindern, dass Kühlmittel in den Schmiermittelkreislauf oder in den Zylinderraum gelangen kann. Eine weitere Dichtung 121 ist auf dem Trennelement 118 und/oder am Kolbenoberteil 1 vorgesehen.

In der vorliegenden Darstellung ist der Kolbenoberteil 1 getrennt vom Kolbenunterteil 3 dargestellt, also in einem Zustand unmittelbar vor dem Zusammenbau. Der Kolbenunterteil 3 weist auch ein ringförmig angeordnetes Kolbenhemd 2 auf. Auch die Position des Kolbenhemds 2 wird durch das Spannelement 4 festgelegt. Das Kolbenhemd 2 enthält eine Bohrung 50, durch welche das Spannelement 4 hindurchgeführt ist.

Der Kolbenunterteil 3 enthält ebenfalls eine Bohrung 70, durch welche das Spannelement 4 hindurchgeführt ist. Die Bohrung 70 hat eine Längsachse 71, die im wesentlichen parallel zur Längsachse 11 des Kolbens 10 angeordnet ist.

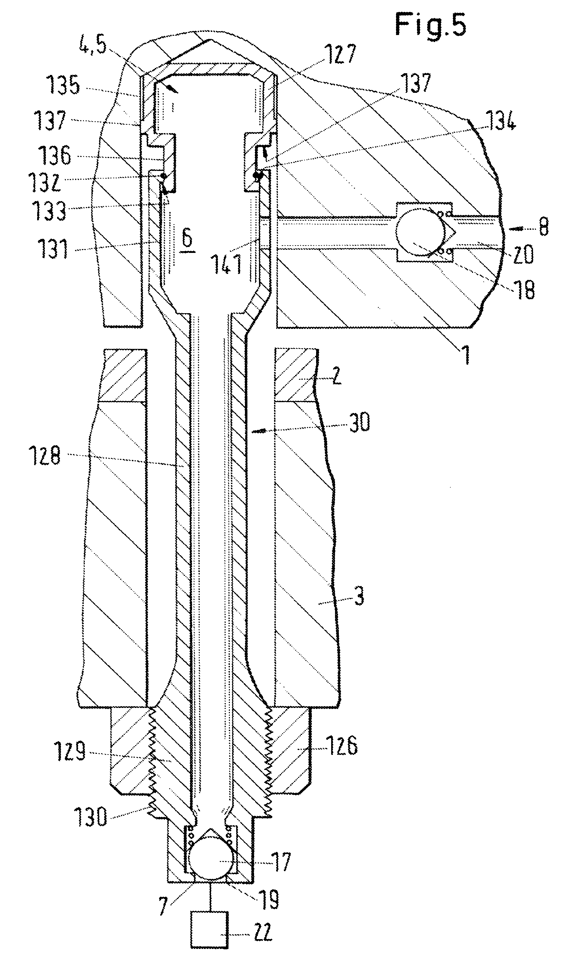

Der Kolben enthält eine Schmiereinrichtung 5 zur Schmierung einer Lauffläche eines Zylinders, in welchem der Kolben 10 hin und her bewegbar ist. Diese Schmiereinrichtung ist in Fig. 5 im Detail gezeigt, welche einen Schnitt durch das Spannelement gemäss Fig. 3 zeigt. Die Schmiereinrichtung 5 ist im Inneren des Spannelements 4 angeordnet. Das Spannelement 4 enthält einen Schmiermittelvorratsraum 6. Das Spannelement 4 ist gemäss Fig. 4 oder Fig. 5 als Spannschraube 9 ausgebildet. In dem Kolbenoberteil 1 ist eine Gewindebohrung 125 vorgesehen, die zur Aufnahme eines Schraubenkörpers 127 der Spannschraube 9 dient. An den Schraubenkörper schliesst ein Schraubenhals 128 an, an welchen wiederum ein Schraubenkopfelement 129 anschliesst. Das Schraubenkopfelement weist ein Aussengewinde 130 auf. Das Aussengewinde 130 dient zur Aufnahme einer Spannmutter 126.

Der Schmiermittelvorratsraum 6 ist in seiner Grösse veränderbar. Hierzu weist der Schraubenkörper 127 ein Schmierkolbenelement 30 auf. Das Schmierkolbenelement 30 ist relativ zum Schraubenkörper 127 beweglich. Der Schraubenkörper 127 weist ein Aussengewinde 135 auf, welches zur Verbindung mit dem Innengewinde der Gewindebohrung 125 dient. Somit ist der Schraubenkörper 127 im zusammengebauten Zustand fest mit dem Kolbenoberteil 1 verbunden. Das Schmierkolbenelement 30 ist relativ zum Schraubenkörper 127 beweglich. Das Schmierkolbenelement 30 umfasst den Schraubenhals 128 und das Schraubenkopfelement 129. Das Kolbenunterteil 3 und gegebenenfalls das Kolbenhemd 2 sind mit der Spannmutter 126 im Bereich des Schraubenhalses 128 und/oder des Schraubenkopfelements 129 befestigt. Ein Teil des Schraubenhalses 128 kann sich auch in einer Bohrung 124 des Kolbenoberteils 1 befinden. Diese Bohrung 124 schliesst an die Gewindebohrung 125 an, was in Fig. 3 gezeigt ist.

Der Schraubenkörper weist einen Mantelteil 136 auf, entlang dessen ein zum Schraubenhals 128 gehöriges Greifelement 131 gleitet. Das Greifelement 131 weist eine Dichtung 132 auf, die verhindert, dass Schmiermittel in die Bohrung 124 austritt. Die Dichtung 132 ist in einem Vorsprung 133 angeordnet, welcher in gleitendem Kontakt mit dem Mantelteil 136 steht. Der Mantelteil 136 weist einen Anschlag 134 auf, der verhindert, dass der Vorsprung 133 den Kontakt mit dem Mantelteil 136 verliert. Zwischen dem Aussengewinde 135 und dem Mantelteil 136 ist ebenfalls ein Anschlag 137 vorgesehen, der verhindert, dass das Greifelement 131 mit dem Aussengewinde 135 in Kontakt kommt. Gleichzeitig begrenzen der Anschlag 134 und der Anschlag 137 den Hub des Schraubenhalses. Hierdurch ist das maximale und minimale Volumen des Schmiermittelvorratsraums 6 festgelegt.

Der Schmiermittelvorratsraum 6 weist ein erstes Ende 7 auf, an welchem ein erstes Absperrelement 17 angeordnet ist. Das erste Ende befindet sich am Schraubenkopfelement 129 und bildet eine Eintrittsöffnung aus. Das erste Absperrelement 17 ist als Rückschlagventil ausgebildet, mittels welchem die Eintrittsöffnung verschliessbar ist. Das Rückschlagventil wird beispielsweise von einem Andockelement geöffnet, wie es beispielsweise in der EP10165750 gezeigt ist. Durch das Andockelement wird eine Verbindung zu einer Schmiermittelquelle geöffnet, sodass Schmiermittel in den Schmiermittelvorratsraum 6 eintreten kann.

Der Schmiermittelvorratsraum 6 weist ein zweites Ende 8 auf, an welchem ein zweites Absperrelement 18 angeordnet ist. Durch das zweite Absperrelement 18 ist ein Kanal 20 zu einer Schmierstelle 24 freigebbar, wenn das Absperrelement 24 in einer offenen Stellung gehalten ist. Der Schmiermittelvorratsraum 6 weist mindestens eine Austrittsöffnung 141 für das Schmiermittel auf. Zwischen der Wand des Greifelements 131, welche die Austrittsöffnung 141 umgibt und dem Kolbenoberteil 1 kann ein in der Zeichnung nicht dargestelltes Dichtelement vorgesehen sein.

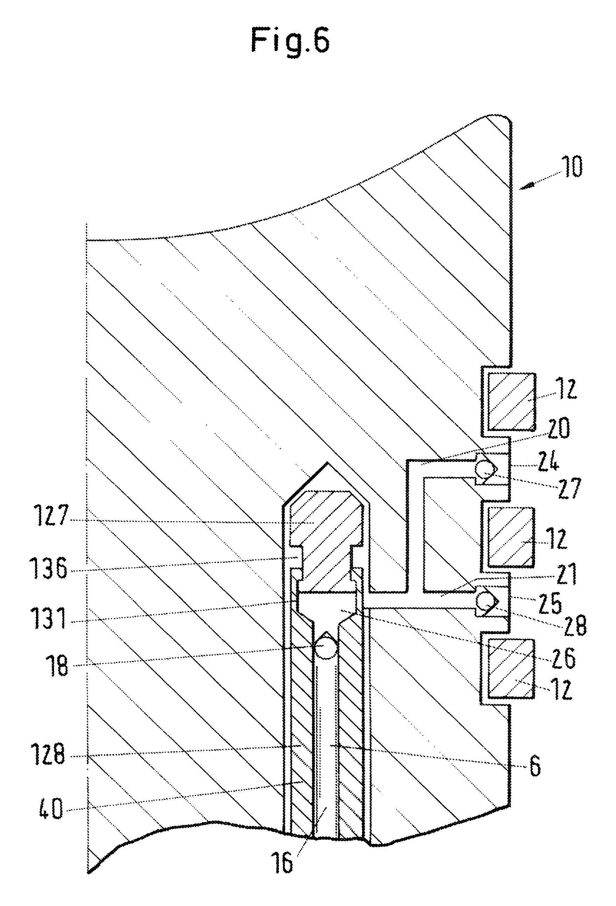

In Fig. 6 ist ein weiteres Ausführungsbeispiel gezeigt. Der Schmiermittelvorratsraum 6 umfasst einen ersten Teilraum 16 und einen zweiten Teilraum 26. Der erste Teilraum 16 weist zwischen dem ersten Absperrelement 17 und dem zweiten Absperrelement 18 ein konstantes Volumen auf. Der erste Teilraum 16 befindet sich im Schraubenhals 128. Das in der Fig. 6 nicht gezeigte Schraubenkopfelement 129 ist wie in Fig. 5 ausgestaltet.

Der zweite Teilraum 26 ist stromabwärts des zweiten Absperrelements 18 angeordnet, wobei dessen Volumen mittels eines Schmierkolbenelements 40 veränderbar ist. Wenn der Kolben 10 einen Kompressionshub durchführt, bewegt sich der Schraubenhals 128 relativ zum Schraubenkopfelement 129. Das heisst, dem Schraubenhals kommt die Funktion eines Schmierkolbenelements zu. Auch in diesem Fall ist der Kolbenunterteil 3 relativ zum Kolbenoberteil 1 beweglich. Beim Kompressionshub werden Kolbenunterteil 3 und Kolbenoberteil 1 zueinander bewegt, bis das im Schmiermittelvorratsraum 6 eingeschlossene Schmiermittel eine weitere Bewegung verhindert, sodass der Kolbenunterteil 3 eine Druckkraft auf den Kolbenoberteil 1 ausüben kann. Es ist möglich, dass Kolbenoberteil 1 und Kolbenunterteil 3 aufeinander aufliegen.

Der Schraubenkörper 127 kann, wie in Fig. 5 gezeigt ist, einen Teil des Schmiermittelvorratsraums 6 enthalten, oder als Vollkörper ausgebildet sein. Wie in Fig. 5 gezeigt, ist ein Mantelteil 136 vorgesehen, entlang dessen ein Greifelement 131 des Schraubenhalses 128 eingreift. Das Greifelement 131 ist zwischen einem unteren Anschlag 134 und einem oberen Anschlag 137 verschiebbar. Das zwischen dem vom Greifelement und dem Boden des Schraubenkörpers 127 eingeschlossene Volumen des zweiten Teilraums 26 ist somit durch Bewegung des Schraubenhalses 128 relativ zum Schraubenkörper 127 veränderbar.

Der Schmiermittelvorratsraum 6 ist über zumindest einen Kanal 20, 21 mit zumindest einer Schmierstelle 24, 25 verbunden, wobei die Schmiermittelzufuhr zur Schmierstelle mittels eines Absperrelements 27, 28 regelbar ist. Die Schmierstelle 24, 25 befindet sich an einer Mantelwand des Kolbens 10 zwischen zwei Kolbenringen. Eine Mehrzahl an Schmierstellen 24, 25 kann an unterschiedlichen Positionen am Kolbenmantel vorgesehen sein, wobei die Schmierstellen zwischen zwei beliebigen Kolbenringen 12 angeordnet sein können und auch Schmierstellen über den Umfang des Kolbenmantels verteilt sein können.

Wird der Schraubenhals 128 gegen den Schraubenkörper 127 bewegt, verkleinert sich das Volumen des zweiten Teilraums 26 und dementsprechend erhöht sich der Druck des Schmiermittels. Das unter Druck stehende Schmiermittel im Teilraum 26 und in den Kanälen 21, 22 bewirkt ein Öffnen der Absperrelemente 27, 28. Daher kann der Lauffläche des Zylinders eine definierte Menge an Schmiermittel zu einem definierten Zeitpunkt zugeführt werden.

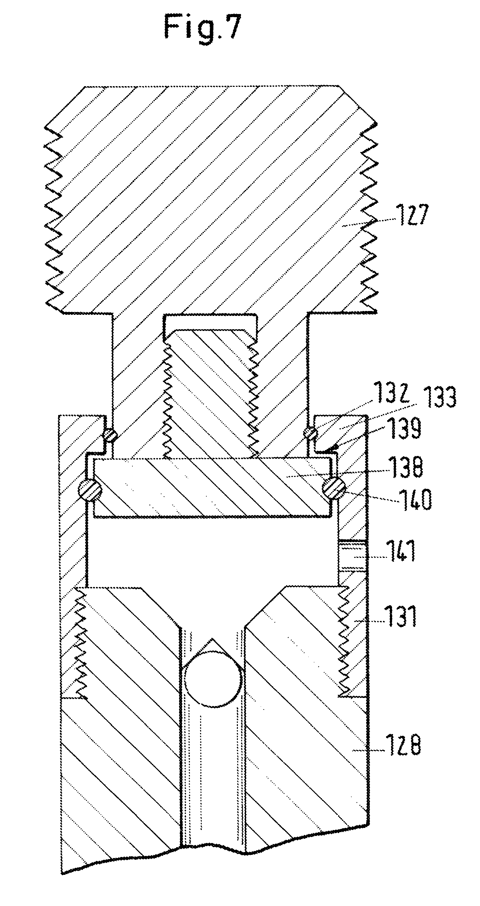

Ein weiteres Ausführungsbeispiel für einen Schraubenkörper 127 und einen zugehörigen Schraubenhals 128 ist in Fig. 7 gezeigt. In Fig. 7 ist der Schraubenkörper 127 mehrteilig ausgebildet, sodass der Zusammenbau von Schraubenkörper 127 und Schraubenhals 128 vereinfacht ist. Der Schraubenkörper 127 ist mit einer Gewindebohrung versehen, die zur Aufnahme eines Steckelements 138 dient. Dieses Steckelement 138 weist einen Absatz 139 auf, der als Anschlag für den Vorsprung 133 des Greifelements 131 dient. Der Vorsprung 133 des Greifelements 131 enthält eine Dichtung 132, sodass der Vorsprung dichtend entlang des Mantelteils 136 gleiten kann. Des weiteren weist das Steckelement 138 am Absatz ein Dichtelement 140 auf.

Das Greifelement 131 enthält in seiner Wand eine Austrittsöffnung 141 für das Schmiermittel. Das Greifelement weist an seinem unteren Ende ein

Innengewinde auf, welches mit einem zugehörigen Aussengewinde des Schraubenhalses im Eingriff steht.

Wenn sich der Kolben durch den im Brennraum durch die Verbrennung des Brennstoffs aufgebauten Druck in Richtung des unteren Totpunkts bewegt, schiebt der Kolbenoberteil 3 über die Spannelemente 4 den Kolbenunterteil 3 an. Das Greifelement 131 des Schraubenhalses 128 verbleibt am Anschlag 137, sodass der Schmiermittelvorratsraum 6 seine minimale Grösse beibehält. Erst wenn sich das Greifelement 131 vom Anschlag 137 entlang des Mantelteils 136 in Richtung des Vorsprungs bewegt, vergrössert sich der Schmiermittelvorratsraum und ist vorbereitet für die Aufnahme von neuem Schmiermittel. Kolbenunterteil 3 und Kolbenoberteil 1 bewegen sich voneinander weg, sodass ein Spalt zwischen dem Kolbenunterteil 1 und dem Kolbenoberteil 3 und gegebenenfalls dem Kolbenhemd 2 entsteht. Wenn sich der Kolben am unteren Totpunkt befindet, greift das erste Ende 7, welches das erste Absperrelement 17 enthält, in ein hierfür vorgesehenes Andockelement ein. Das Andockelement ist mit einer Schmiermittelquelle 22 verbunden, wie in Fig. 5 schematisch gezeigt wird. Zur Ausgestaltung des Andockelements wird auf die EP10165750 der Anmelderin verwiesen. Wenn das erste Ende 7 vom Andockelement aufgenommen ist, kann Schmiermittel durch die am ersten Ende 7 befindliche Eintrittsöffnung 19 in den Schmiermittelvorratsraum 6 einströmen. Sobald sich der Kolben wieder von dem Andockelement wegbewegt, wird die Eintrittsöffnung 19 durch das erste Absperrelement 17 verschlossen.

## Patentansprüche

1. Kolben (10) für einen Grossmotor, enthaltend ein Kolbenoberteil (1), und ein Kolbenunterteil (3), welche durch ein Spannelement (4) miteinander verbunden sind,
**gekennzeichnet, durch**
eine Schmiereinrichtung (5) zur Schmierung einer Lauffläche eines Zylinders, in welchem der Kolben (10) hin und her bewegbar ist, wobei die Schmiereinrichtung (5) im Inneren des Spannelements (4) angeordnet ist, wobei das Spannelement (4) einen Schmiermittelvorratsraum (6) enthält, wobei das Kolbenoberteil (1) relativ zum Kolbenunterteil (3) beweglich ist, sodass der Schmiermittelvorratsraum (6) in seiner Grösse veränderbar ist, wobei das Spannelement (4) eine Spannschraube ist.

2. Kolben nach Anspruch 1, wobei der Schmiermittelvorratsraum (6) ein erstes Ende (7) aufweist, an welchem ein erstes Absperrelement (17) angeordnet ist und ein zweites Ende (8) aufweist, an welchem ein zweites Absperrelement (18) angeordnet ist.

3. Kolben nach Anspruch 2, wobei durch das erste Absperrelement (17) eine Verbindung zu einer Schmiermittelquelle (22) freigebbar ist und durch das zweite Absperrelement (18) ein Kanal (20) zu einer Schmierstelle (24) freigebbar ist, wenn das entsprechende Absperrelement (17, 18) in einer offenen Stellung gehalten ist.

4. Kolben nach Anspruch 3, wobei die Grösse des Schmiermittelvorratsraums (6) durch ein bewegliches Schmierkolbenelement (30, 40) veränderbar ist.

5. Kolben nach Anspruch 3, wobei der Schmiermittelvorratsraum (6) einen ersten Teilraum (16) und einen zweiten Teilraum (26) umfasst, wobei der erste Teilraum (16) zwischen dem ersten (17) und dem zweiten Absperrelement (18) ein konstantes Volumen aufweist, der zweite Teilraum (26) stromabwärts des zweiten Absperrelements (18) angeordnet ist, dessen Volumen mittels eines Schmierkolbenelements (40) veränderbar ist.

6. Kolben nach einem der vorhergehenden Ansprüche, wobei das Spannelement (4) einen Schraubenkörper (127) umfasst, welcher mit dem Kolbenoberteil (1) verbunden ist.

7. Kolben nach Anspruch 6, wobei der Schraubenkörper (127) mit einem Schraubenhals (128) verbunden ist, wobei an den Schraubenhals (128) ein Schraubenkopfelement (129) anschliesst, mittels welchem das Kolbenunterteil (3) mit dem Kolbenoberteil (1) verbunden werden kann.

8. Kolben nach Anspruch 7, wobei der Schraubenkörper (127) ein Mantelteil 136 aufweist, entlang dessen ein Greifelement (131) hin und her bewegbar ist, wobei das Greifelement als ein Teil des Schraubenhalses (128) ausgebildet ist.

9. Kolben nach Anspruch 8, wobei das Greifelement (131) zwischen einem ersten Anschlag (137) und einem zweiten Anschlag (134), die als Vorsprünge des Schraubenkörpers ausgebildet sind, hin und her bewegbar ist.

10. Kolben nach Anspruch 7 oder 8, wobei das Greifelement (131) eine Auslassöffnung für Schmiermittel enthält.

11. Kolben nach einem der vorhergehenden Ansprüche wobei ein Kolbenhemd (2) zwischen dem Kolbenunterteil (3) und dem Kolbenoberteil (1) angeordnet ist, wobei das Kolbenhemd (2) mit dem Spannelement (4) in einer definierten Position zwischen Kolbenoberteil (1) und Kolbenunterteil (3) haltbar ist.

12. Kolben nach einem der vorhergehenden Ansprüche, wobei der Schmiermittelvorratsraum (6) über einen Kanal (20, 21) mit zumindest einer Schmierstelle (24, 25) verbunden ist, wobei die Schmiermittelzufuhr zur Schmierstelle mittels eines Absperrelements (27, 28) regelbar ist.

13. Kolben nach einem der vorhergehenden Ansprüche, wobei das erste Absperrelement 17 der Schmiermittelzufuhr zu der Schmiereinrichtung (5) ein Ventilelement umfasst.

14. Kolben nach einem der vorhergehenden Ansprüche, wobei der Kolben eine Mehrzahl von Spannelementen aufweist, wobei mindestens eines der Spannelemente eine Schmiereinrichtung nach einem der vorhergehenden Ansprüche enthält.

15. Grossmotor, umfassend einen Kolben nach einem der vorhergehenden Ansprüche.

## Claims

1. A piston (10) for a large engine, containing an upper piston part (1) and a piston lower part (3) which are connected to one another by a clamping element (4) **characterised by** a lubrication device (5) for lubricating a running surface of a cylinder in which the piston (10) can be moved to and fro, wherein the lubrication device (5) is arranged in the interior of the clamping element (4), wherein the clamping element (4) contains a lubricant storage space (6), wherein the upper piston part (1) can be moved relative to the lower piston part (3) so that the size of the lubricant storage space (6) can be changed, wherein the clamping element (4) is a clamping screw.

2. A piston in accordance with claim 1, wherein the lubricant storage space (6) has a first end (7) at which a first blocking element (17) is arranged and a second end (8) at which a second blocking element (18) is arranged.

3. A piston in accordance with claim 2, wherein a connection to a lubricant source (22) can be released by the first blocking element (17) and a passage (20) to a lubrication site (24) can be released by the second blocking element (18) when the corresponding blocking element (17, 18) is held in an open position.

4. A piston in accordance with claim 3, wherein the size of the lubricant storage space (6) can be changed by a movable lubrication piston element (30, 40).

5. A piston in accordance with claim 3, wherein the lubricant storage space (6) includes a first part space (16) and a second part space (26), wherein the first part space (16) has a constant volume between the first blocking element (17) and the second blocking element (18) and the second part space (26) is arranged downstream of the second blocking element (18) whose volume can be changed by means of a lubrication piston element (40).

6. A piston in accordance with any one of the preceding claims, wherein the clamping element (4) includes a screw body (127) which is connected to the upper piston part (1).

7. A piston in accordance with claim 6, wherein the screw body (127) is connected to a screw neck (128), wherein the screw neck (128) is adjoined by a screw head element (129) by means of which the lower piston part (3) can be connected to the upper piston part (1).

8. A piston in accordance with claim 7, wherein the screw body (127) has a jacket part (136) along which a gripping element (131) can be moved to and fro, wherein the gripping element is formed as a part of the screw neck (128).

9. A piston in accordance with claim 8, wherein the gripping element (131) can be moved to and fro between a first abutment (137) and a second abutment (134) which are formed as projections of the screw body.

10. A piston in accordance with claim 7 or claim 8, wherein the gripping element (131) contains an outlet opening for lubricant.

11. A piston in accordance with any one of the preceding claims, wherein a piston skirt (2) is arranged between the lower piston part (3) and the upper piston part (1), wherein the piston skirt (2) can be held by the clamping element (4) in a defined position between the upper piston part (1) and the lower piston part (3).

12. A piston in accordance with any one of the preceding claims, wherein the lubricant storage space (6) is connected via a passage (20, 21) to at least one lubrication site (24, 25), wherein the lubricant supply to the lubrication site can be regulated by means of a blocking element (27, 28).

13. A piston in accordance with any one of the preceding claims, wherein the first blocking element (17) of the lubricant supply to the lubrication device (5) includes a valve element.

14. A piston in accordance with any one of the preceding claims, wherein the piston has a plurality of clamping elements, wherein at least one of the clamping elements contains a lubrication device in accordance with any one of the preceding claims.

15. A large engine including a piston in accordance with any one of the preceding claims.

## Revendications

1. Piston (10) pour un gros moteur, comprenant une partie supérieure de piston (1) et une partie inférieure de piston (3) reliées entre elles à l'aide d'un élément de serrage (4), **caractérisé par**
un dispositif de lubrification (5) pour la lubrification d'une surface de roulement d'un cylindre dans lequel le piston (10) est mobile avec un mouvement de va-et-vient, le dispositif de lubrification (5) se trouvent à l'intérieur de l'élément de serrage (4), l'élément de serrage (4) comprenant un réservoir de lubrifiant (6), la partie supérieure du piston (1) étant mobile par rapport à la partie inférieure du piston (3), de façon à ce que la taille réservoir de lubrifiant (6) soit variable, l'élément de serrage (4) étant une vis de serrage.

2. Piston selon la revendication 1, le réservoir de lubrifiant (6) comprenant une première extrémité (7) sur laquelle se trouve un premier élément de blocage (17) et une deuxième extrémité (8) sur laquelle se trouve un deuxième élément de blocage (18).

3. Piston selon la revendication 2, le premier élément de blocage (17) permettant de débloquer une liaison avec une source de lubrifiant (22) et le deuxième élément de blocage (18) permettant de débloquer un canal (20) vers un point de lubrification (24) lorsque l'élément de blocage (17, 18) correspondant est maintenu dans une position ouverte.

4. Piston selon la revendication 3, la taille du réservoir de lubrifiant (6) pouvant être modifiée par un élément de piston de lubrification mobile (30, 40).

5. Piston selon la revendication 3, le réservoir de lubrifiant (6) comprenant un premier espace partiel (16) et un deuxième espace partiel (26), le premier espace partiel (16) présentant, entre le premier (17) et le deuxième élément de blocage (18), un volume constant, le deuxième espace partiel (26) se trouvant en aval du deuxième élément de blocage (18), dont le volume peut être modifié à l'aide d'un élément de piston de lubrification (40).

6. Piston selon l'une des revendications précédentes, l'élément de serrage (4) comprenant un corps fileté (127) relié à la partie supérieure du piston (1).

7. Piston selon la revendication 6, le corps fileté (127) étant relié avec un col fileté (128), un élément à tête filetée (129) étant relié au col fileté (128), à l'aide duquel la partie inférieure du piston (3) peut être reliée avec la partie supérieure du piston (1).

8. Piston selon la revendication 7, le corps fileté (127) comprenant une partie de revêtement (136), le long de laquelle un élément de préhension (131) est mobile avec un mouvement de va-et-vient, l'élément de préhension étant conçu comme une partie du col fileté (128).

9. Piston selon la revendication 8, l'élément de préhension (131) étant mobile avec un mouvement de va-et-vient entre une première butée (137) et une deuxième butée (134) qui sont conçues comme des saillies du corps fileté.

10. Piston selon la revendication 7 ou 8, l'élément de préhension (131) comprenant une ouverture de sortie pour le lubrifiant.

11. Piston selon l'une des revendications précédentes, une chemise de piston (2) se trouvant entre la partie inférieure du piston (3) et la partie supérieure du piston (1), la chemise de piston (2) pouvant être maintenue avec l'élément de serrage (4) dans une position définie entre la partie supérieure du piston (1) et la partie inférieure du piston (3).

12. Piston selon l'une des revendications précédentes, le réservoir de lubrifiant (6) étant relié par l'intermédiaire d'un canal (20, 21) avec au moins un point de lubrification (24, 25), l'alimentation en lubrifiant vers le point de lubrification pouvant être régulé à l'aide d'un élément de blocage (27, 28).

13. Piston selon l'une des revendications précédentes, le premier élément de blocage (17) de l'alimentation en lubrifiant du dispositif de lubrification (5) comprenant un élément à soupape.

14. Piston selon l'une des revendications précédentes, le piston comprenant une pluralité d'éléments de serrage, au moins un des éléments de serrage comprenant un dispositif de lubrification selon l'une des revendications précédentes.

15. Gros moteur comprenant un piston selon l'une des revendications précédentes.
